# EUROPEAN PATENT APPLICATION

(11) **EP 2 732 926 A1**
(43) Date of publication of application: **21.05.2014**
(21) Application number: 13190815.4
(22) Date of filing: 30.10.2013
(51) Int. Cl.: B25J 9/00, B25J 9/16, B25J 15/00

(54) **Robot system, robot hand, robot, and a robot control method**

(30) Priority: 19.11.2012 JP 2012253580
(71) Applicant: Kabushiki Kaisha Yaskawa Denki, Kitakyushu-shi, Fukuoka 806-0004 (JP)
(72) Inventor: Takizawa, Katsumi, Kitakyushu-shi, Fukuoka 806-0004 (JP)
(74) Representative: Viering, Jentschura & Partner Patent- und Rechtsanwälte

(57) **Abstract**

A robot system includes a robot having one or more drive shafts, a hand attached to the robot and configured to hold a container having an opening through which contents are put i n and taken out of the container, and a controller for control ling operations of the robot and the hand. The controller is configured to perform an operation of moving the hand to a hol ding position to hold the container, an operation of moving t he hand to a discharging position and tilting the container t o discharge the contents through the opening, and an operatio n of moving the hand to a placing position to release the cont ainer held by the hand.

## Description

### BACKGROUND OF THE INVENTION

### Field of the Invention

An embodiment disclosed herein relates to a robot system, a robot hand and a robot.

### Description of the Related Art

A demand has existed for automating a cargo transfer work using a robot. Japanese Patent Application Publication No. 2001-089090 discloses a technology for transferring a box-shaped cargo through the use of a robot.

In automating the cargo transfer work, it is required that a work be efficiently performed from the viewpoint of economy.

### SUMMARY OF THE INVENTION

In view of the above, an embodiment disclosed herein provides a robot system, a robot hand and a robot, which are capable of effectively transferring the content of a container.

In order to solve the aforementioned problem, according to one aspect of the present disclosure, there is provided a r obot system, including: a robot having one or more drive shafts; a hand attached to the robot and configured to hold a container having an opening through which contents are put in and taken out of the container; a controller for controlling operations of the robot and the hand, wherein the controller is configured to perform an operation of moving the hand to a holding position to hold the container, an operation of movin g the hand to a discharging position and tilting the containe r to discharge the contents through the opening, and an opera tion of moving the hand to a placing position to release the c ontainer held by the hand.

In order to solve the aforementioned problem, according to another aspect of the present disclosure, there is provide d a robot hand attached to a robot having one or more drive sh afts and configured to hold a container having an opening thr ough which contents are put in and taken out of the container, wherein the robot hand is configured to move to a holding pos ition to hold the container, to move to a discharging positio n to tilt the container to discharge the contents through the opening, and to move to a placing position to release the cont ainer.

In order to solve the aforementioned problem, according to a further aspect of the present disclosure, there is provi ded a robot which includes one or more drive shafts and to whi ch is attachable a hand configured to hold a container having an opening through which contents are put in and taken out of the container, wherein the robot is configured to perform an operation of moving the hand to a holding position to hold the container, an operation of moving the hand to a discharging p osition and tilting the container to discharge the contents f rom the opening, and an operation of moving the hand to a plac ing position to release the container held by the hand.

In order to solve the aforementioned problem, according to a still further aspect of the present disclosure, there is provided a robot control method for controlling a robot which includes one or more drive shafts and to which is attachable a hand configured to hold a container having an opening throu gh which contents are put in and taken out of the container, t he method including: moving the hand to a holding position to hold the container; moving the hand to a discharging position and tilting the container to discharge the contents through the opening; and moving the hand to a placing position to rele ase the container held by the hand.

According to the present disclosure, the contents of a container can be effectively transferred by carrying out a work of de-palletizing the container and a work of taking out the contents from the container through a series of operations.

### BRIEF DESCRIPTION OF THE DRAWINGS

Fig. 1 is a schematic view showing the overall configura tion of a robot system according to one embodiment.
Fig. 2A is a perspective view schematically showing a po sture of a hand when a plastic container is kept in an upwardl y-oriented posture, and Fig. 2B is a perspective view schemat ically showing a posture of the hand when a plastic container is kept in a downwardly-oriented posture.
Fig. 3 is a side view schematically showing a configurat ion of the hand.
Fig. 4 is a plan view schematically showing the configur ation of the hand.
Fig. 5 to Fig. 9 are schematic diagrams for explaining o ne example of operations of a robot and the hand performed und er the control of a controller.
Fig. 10 is a flow chart for explaining robot control met hod.

### DESCRIPTION OF THE EMBODIMENTS

An embodiment of the present disclosure will now be desc ribed with reference to the drawings. If annotations "front" , "rear", "left", "right", "upper" and "lower" exist in the d rawings, the terms "front", "rear", "left", "right", "upper" and "lower" used in the description of the subject specificat ion indicate the directions designated by the annotations.

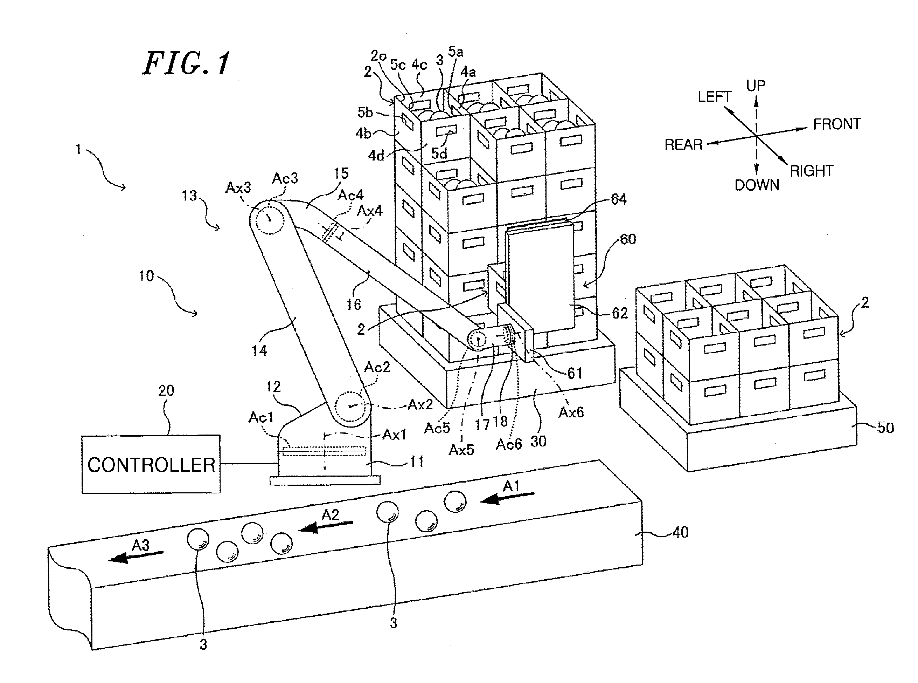

Referring first to Figs. 1 to 4, description will be mad e on the overall configuration of a robot system according to the present embodiment and the components thereof.

As shown in Fig. 1, the robot system 1 of the present em bodiment includes a holding-side pallet (a holding-side conta iner storage location) 30, a robot 10, a controller 20, a conv eyor (a transportation unit) 40 and a placing-side pallet (a placing-side container storage location) 50. The holding-sid e pallet 30, the conveyor 40 and the placing-side pallet 50 ar e at least partially arranged within an effective operation r ange of the robot 10.

A plurality of general-purpose box-shaped (substantiall y rectangular parallelepiped) plastic containers 2 (hereinaft er briefly referred to as "containers 2"), each of which rece ives one or more articles (contents) 3, is stacked and placed on the holding-side pallet 30. The stacked state (the positi on, orientation, quantity, stage number, column number, etc.) of the containers 2 on the holding-side pallet 30 is not limi ted to the one shown in Fig. 1.

Examples of the articles 3 include, but are not limited to, agricultural products (crops) such as vegetables and frui ts, marine products such as seafood and seaweeds, industrial goods, components and raw materials.

The upper surface portion of the container 2 facing upwa rd in the stacked state becomes an opening 2o through which ar ticles 3 can be put in and taken out of the container 2. Thro ugh-holes 5a, 5b, 5c and 5d (which serve as grips when a worke r holds the container 2) are formed in the side surface portio ns 4a, 4b, 4c and 4d of the container 2 facing frontward, rear ward, leftward and rightward in a stacked state, respectively . In the following description, the side surface portions 4a , 4b, 4c and 4d will be referred to as "side surface portion 4 " when they are not distinguished from one another. The throu gh-holes 5a, 5b, 5c and 5d will be referred to as "through-hol e 5" when they are not distinguished from one another.

The robot 10 includes a base block 11, a rotator 12 and an arm 13.

The base block 11 is fixed upright to an installation po rtion for the robot 10 (e.g., a floor (not shown)) by anchor b olts (not shown). Alternatively, the base block 11 may be fix ed to a portion other than the floor (e.g., a ceiling or a wal l (not shown)).

The rotator 12 is connected to the upper end portion of the base block 11 so as to rotate about a rotation axis Ax1 su bstantially perpendicular to the fixing surface (the bottom p ortion in the illustrated example) of the base block 11. By t he operation of an actuator Ac1 provided in (or adjacent to) a joint between the rotator 12 and the base block 11, the rotat or 12 is rotationally driven about the rotation axis Ax1 with respect to the upper end portion of the base block 11.

The arm 13 includes a first structure 14, a second struc ture 15, a third structure 16, a fourth structure 17 and a fif th structure 18, which are arranged from the base end side (th e side of the rotator 12) to the opposite tip end side.

The first structure 14 is connected to the upper end por tion of the rotator 12 so as to rotate about a rotation axis A x2 substantially perpendicular to the rotation axis Ax1. By the operation of an actuator Ac2 provided in (or adjacent to) a joint between the first structure 14 and the rotator 12, the first structure 14 is rotationally driven about the rotation axis Ax2 with respect to the upper end portion of the rotator 12.

The second structure 15 is connected to the tip end port ion of the first structure 14 so as to rotate about a rotation axis Ax3 substantially parallel to the rotation axis Ax2. By the operation of an actuator Ac3 provided in (or adjacent to) a joint between the second structure 15 and the first structu re 14, the second structure 15 is rotationally driven about t he rotation axis Ax3 with respect to the tip end portion of th e first structure 14.

The third structure 16 is connected to the tip end porti on of the second structure 15 so as to rotate about a rotation axis Ax4 substantially perpendicular to the rotation axis Ax 3. By the operation of an actuator Ac4 provided in (or adjace nt to) a joint between the third structure 16 and the second s tructure 15, the third structure 16 is rotationally driven ab out the rotation axis Ax4 with respect to the tip end portion of the second structure 15.

The fourth structure 17 is connected to the tip end port ion of the third structure 16 so as to rotate about a rotation axis Ax5 substantially perpendicular to the rotation axis Ax 4. By the operation of an actuator Ac5 provided in (or adjace nt to) a joint between the fourth structure 17 and the third s tructure 16, the fourth structure 17 is rotationally driven a bout the rotation axis Ax5 with respect to the tip end portion of the third structure 16.

The fifth structure 18 is connected to the tip end porti on of the fourth structure 17 so as to rotate about a rotation axis Ax6 substantially perpendicular to the rotation axis Ax 5. By the operation of an actuator Ac6 provided in (or adjace nt to) a joint between the fifth structure 18 and the fourth s tructure 17, the fifth structure 18 is rotationally driven ab out the rotation axis Ax6 with respect to the tip end portion of the fourth structure 17.

A servo motor and a speed reducer are included in each o f the actuators Ac1 to Ac6 of the robot 10. A motor having an output shaft (a driving shaft) and a position detector are in cluded in the servo motor. The rotation position information indicating the rotation position of the motor of each of the actuators Ac1 to Ac6, as a signal generated from position det ector, is outputted to the controller 20 at every predetermin ed calculation period.

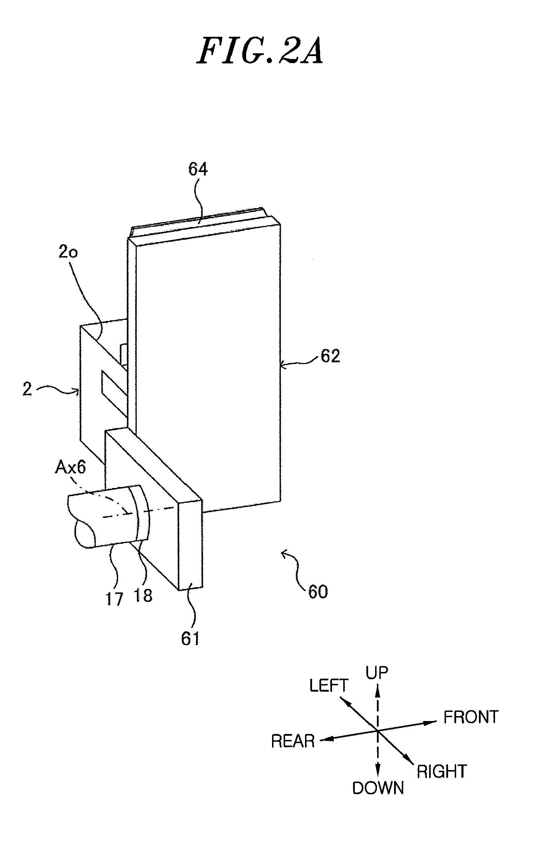

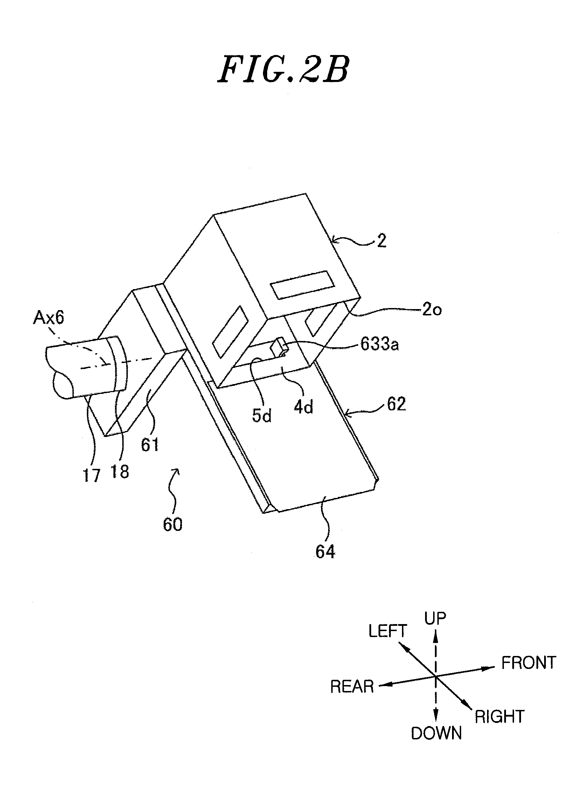

A hand 60 (a robot hand) capable of holding the containe r 2 is attached to the tip end portion of the fifth structure 18 (namely, the tip end portion of the robot 10). The hand 60 is rotated about the rotation axis Ax6 by the rotational oper ation of the fifth structure 18 about the rotation axis Ax6, w hich is caused by the operation of the actuator Ac6. As shown in Figs. 2A and 2B, the hand 60 can tilt the container 2 by m aking rotation about the rotation axis Ax6 while holding the container 2. More specifically, by making rotation about the rotation axis Ax6 while holding the container 2, the hand 60 can switch the posture of the container 2 to an upward posture in which the opening 2o is oriented upward (a posture shown i n Fig. 2A) and a downward posture in which the opening 2o is o riented more downward than a horizontal plane (a posture show n in Fig. 2B).

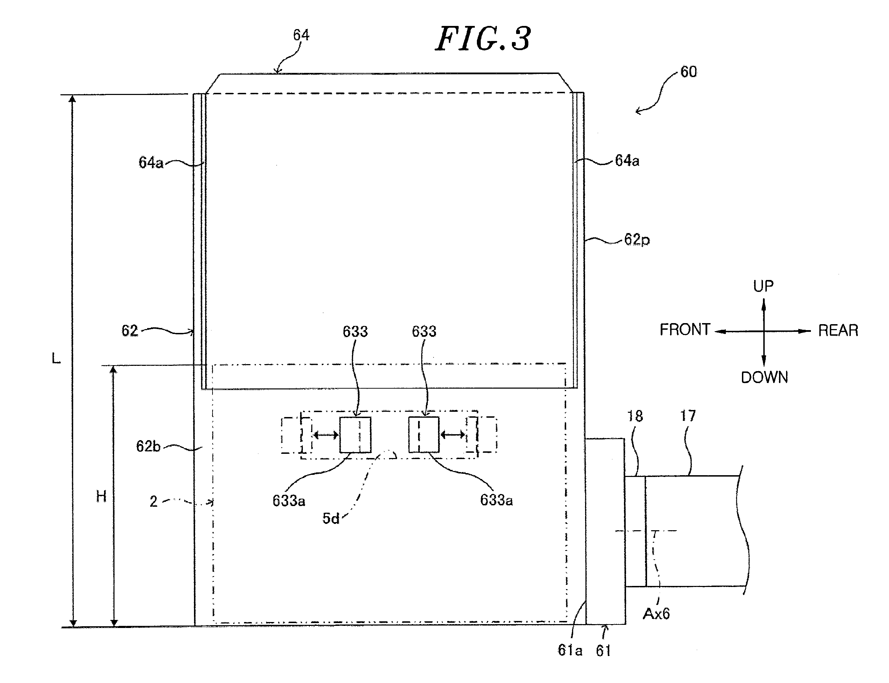

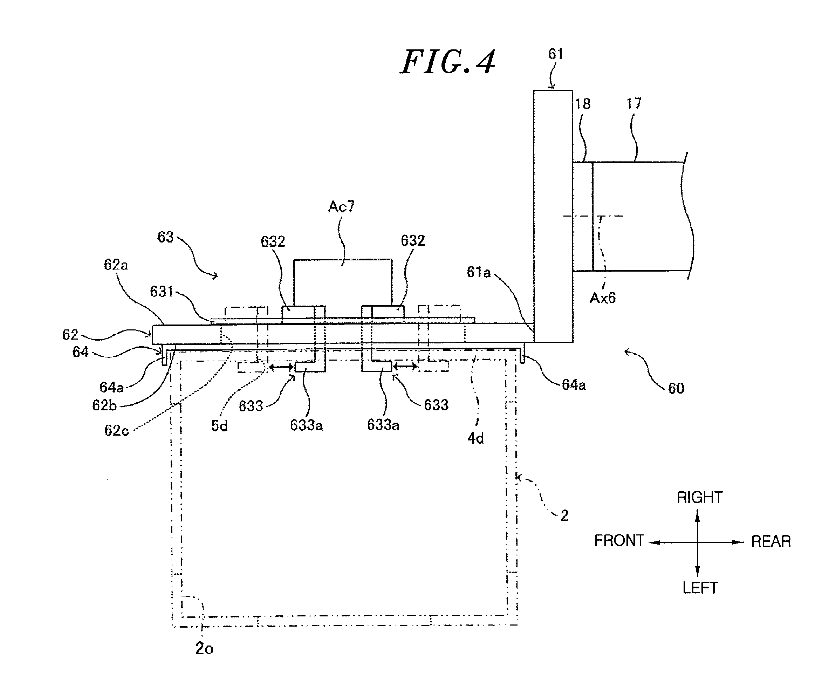

As shown in Figs. 3 and 4, the hand 60 includes a flat b racket 61, a flat plate 62, a holding mechanism 63 which holds one side surface portion 4 of the container 2, and a chute 64 (see Figs. 1 to 2B).

The bracket 61 is fixed to the tip end portion of the fi fth structure 18 and is rotated about the rotation axis Ax6 as the fifth structure 18 rotates about the rotation axis Ax6.

The plate 62 is fixed to an outer edge portion 61a of th e bracket 61 such that the plate 62 extends in the same direct ion as the rotation axis Ax6 (namely, parallel to the rotatio n axis Ax6). The plate 62 is formed longer than the container 2 in the height direction of the container 2 assuming the upw ard posture (in the up-down direction in Fig. 3) (see Fig. 2A) . That is to say, the longitudinal dimension L of the plate 6 2 is larger than the height direction dimension H of the conta iner 2 assuming the upward posture. The plate 62 is arranged so that, when the container 2 held by the holding mechanism 63 is tilted, particularly when the posture of the container 2 i s switched to the downward posture, the plate 62 can be positi oned below the container 2 (see Fig. 2B).

The holding mechanism 63 includes a guide rail 631 and a pair of sliders 632.

The guide rail 631 is fixed to one surface 62a (the righ t surface in Fig. 4) of the plate 62 so as to extend in the di rection of the rotation axis Ax6.

The sliders 632 engage with the guide rail 631 so that t hey can perform an operation (an opening/closing operation) b y which the sliders 632 are moved away from or toward each oth er along the direction of the rotation axis Ax6. The sliders 632 are opened and closed by the operation of the actuator Ac7 provided in a suitable portion of the hand 60 (at the side of one surface 62a of the plate 62 in the illustrated example). Examples of the actuator Ac7 include, but are not limited to, a solenoid, a servo motor, a hydraulic cylinder, an air cylin der and an electric cylinder.

A pair of hooks 633 capable of being pressed against the longitudinal opposite edges (the front and rear edges in Fig s. 3 and 4) of the through-hole 5 formed in the side surface p ortion 4 of the container 2 is fixed to the sliders 632. The hooks 633 are moved away from or toward each other along the d irection of the rotation axis Ax6 by the open/closing operati on of the sliders 632 caused by the operation of the actuator Ac7. The tip end portions 633a of the hooks 633 protrude outw ard beyond the other surface 62b (the left surface in Fig. 4) of the plate 62 through the through-hole 62c formed in the pla te 62 so that the tip end portions 633a extend away from the c enter of the plate 62 in the direction of the rotation axis Ax 6.

In the holding mechanism 63 described above, upon drivin g the actuator Ac7, the driving power thereof is transmitted to the sliders 632 via a suitable power transmission mechanis m (not shown), whereby the sliders 632 are opened or closed. By the opening/closing operation of the sliders 632, the hook s 633 are moved away from or toward each other along the direc tion of the rotation axis Ax6. As a result, the holding mech anism 63 can hold or release the side surface portion 4 of the container 2. Specifically, the hooks 633 are moved toward ea ch other. In this state, the tip end portions 633a of the hoo ks 633 are moved from the outside of the container 2 to the in side thereof through the through-hole 5 of the side surface p ortion 4. Thereafter, the hooks 633 are moved away from each other. Thus, the hooks 633 are brought into contact with, and pressed against, the longitudinal opposite edges of the thro ugh-hole 5. The tip end portions 633a are made to engage with the longitudinal opposite edges of the through-hole 5 in the inside of the container 2. Consequently, the holding mechani sm 63 can hold the side surface portion 4 of the container 2. When the holding mechanism 63 releases the side surface port ion 4 of the container 2, the hooks 633 are moved toward each other. The tip end portions 633a of the hooks 633 are moved f rom the inside of the container 2 to the outside of the contai ner 2 through the through-hole 5 of the side surface portion 4 . Consequently, the holding mechanism 63 can release the sid e surface portion 4 of the container 2.

Portions of the holding mechanism 63 other than the tip end portions 633a of the hooks 633 and the actuator Ac7 are no t shown in the figures other than Fig. 4.

The chute 64 is made of stainless steel. On the other s urface 62b of the plate 62, the chute 64 is removably attached to a portion 62p (hereinafter sometimes referred to as "prot rusion portion 62p") of the plate 62 arranged at one side of t he tip end portions 633a of the hooks 633 (at the upper side i n Fig. 3) in the direction substantially perpendicular to the rotation axis Ax6. The chute 64 may be made of a material ot her than stainless steel. The chute 64 is provided with wall portions 64a at the opposite ends thereof in the direction of the rotation axis Ax6. When the posture of the container 2, t he side surface portion 4 of which is held by the holding mech anism 63, is switched to the downward posture, the articles 3 existing within the container 2 can be slid down along the chu te 64. The wall portions 64a of the chute 64 are not shown in the figures other than Figs. 2B and 3.

Referring again to Fig. 1, the controller 20 includes at least one computer having, e.g., an arithmetic unit, a stora ge unit and an input unit. The controller 20 is connected to the actuators Ac1 to Ac6 provided in the robot 10 and the actu ator Ac7 provided in the hand 60 so that the controller 20 can make communication with the actuators Ac1 to Ac6 and the actu ator Ac7. The controller 20 controls the operations of the ro bot 10 (specifically, the rotator 12 and the first to fifth st ructures 14 to 18 of the arm 13) and the hand 60 (specifically , the holding mechanism 63) by controlling the operation of t he actuators Ac1 to Ac7. Description will be made later in mo re detail on the operations of the robot 10 and the hand 60 pe rformed under the control of the controller 20.

The conveyor 40 conveys the articles 3 discharged out of the container 2 along a specified conveyance route (see arro ws A1, A2 and A3 in Fig. 1).

The containers 2 which become empty as a result of the d ischarge of the articles 3 (hereinafter sometimes referred to as "empty containers 2") are placed and stacked on the placin g-side pallet 50. The stacked state (the position, orientati on, quantity, stage number, row number, etc.) of the containe rs 2 on the placing-side pallet 50 is not limited to the one s hown in Fig. 1.

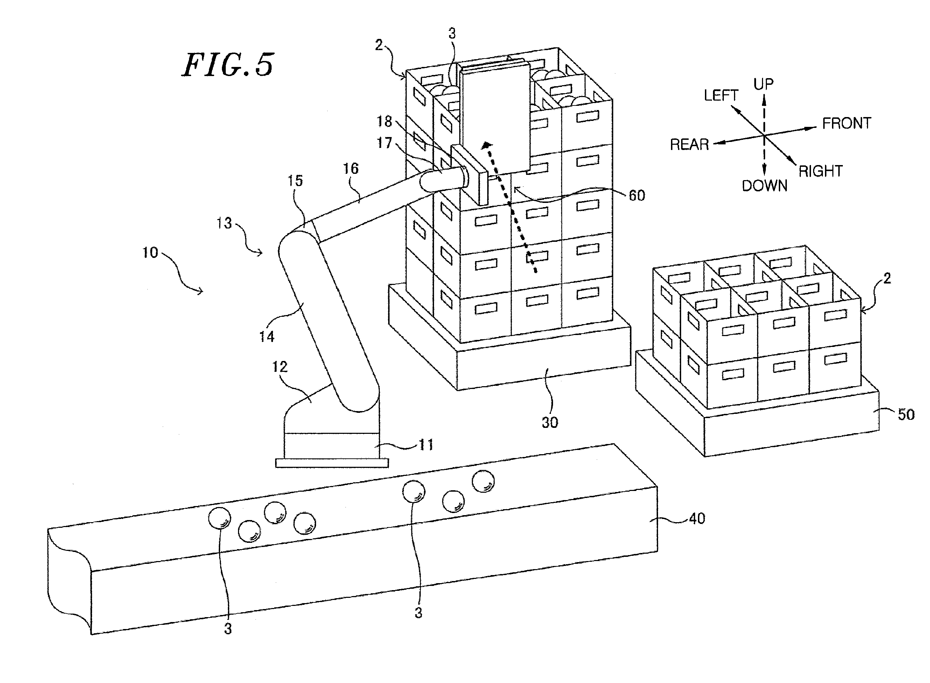

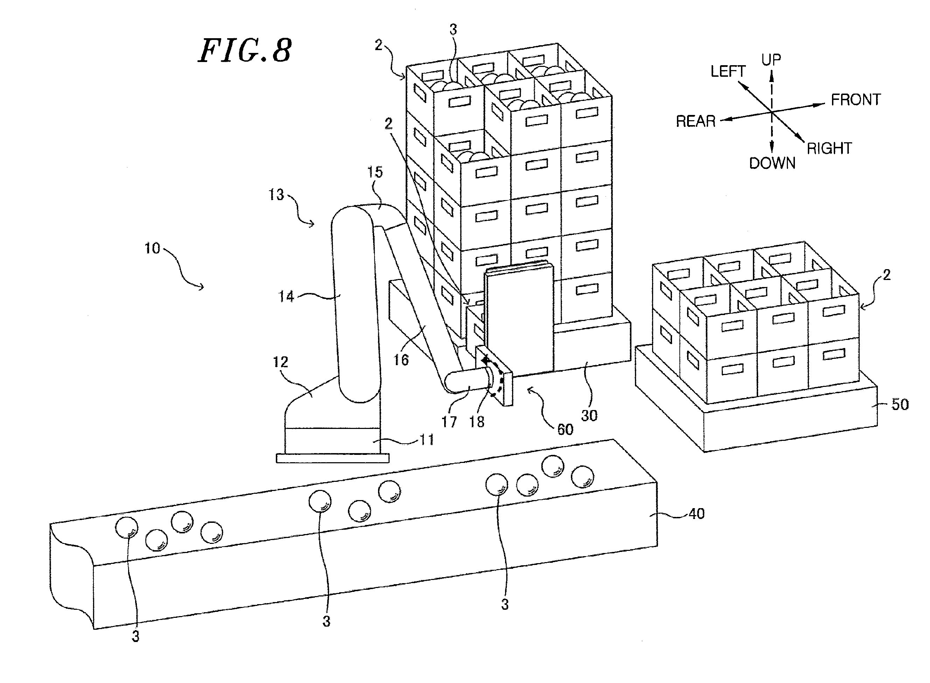

Referring next to Figs. 5 to 10, description will be mad e on one example of the operations of the robot 10 and the han d 60 performed under the control of the controller 20. In Fig s. 5 to 9, one example of the operations of the robot 10 and t he hand 60 performed under the control of the controller 20 is illustrated in a chronological order of Fig. 5, Fig. 6, Fig. 7, Fig. 8 and Fig. 9.

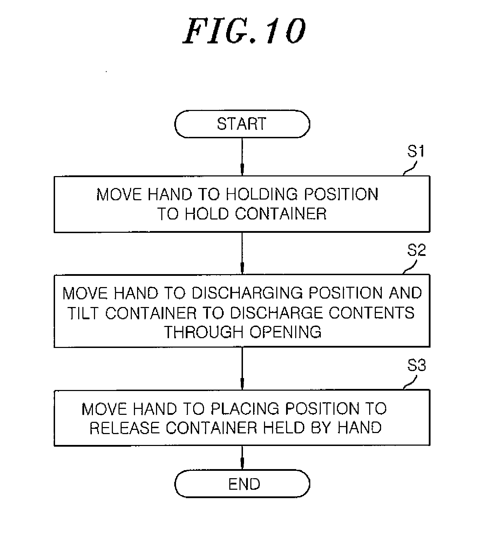

As shown in Fig. 5, the rotator 12 and the first to fift h structures 14 to 18 of the arm 13 are appropriately driven u nder the control of the controller 20. As a result, the robot 10 moves the hand 60 to a holding position on the holding-sid e pallet 30 corresponding to a location of a holding target co ntainer 2. Then, the holding mechanism 63 is appropriately d riven under the control of the controller 20. Thus, the hand 60 holds the side surface portion 4 (the side surface portion 4d in the illustrated example) of the holding target containe r 2 using the holding mechanism 63 (step S1 in Fig. 10).

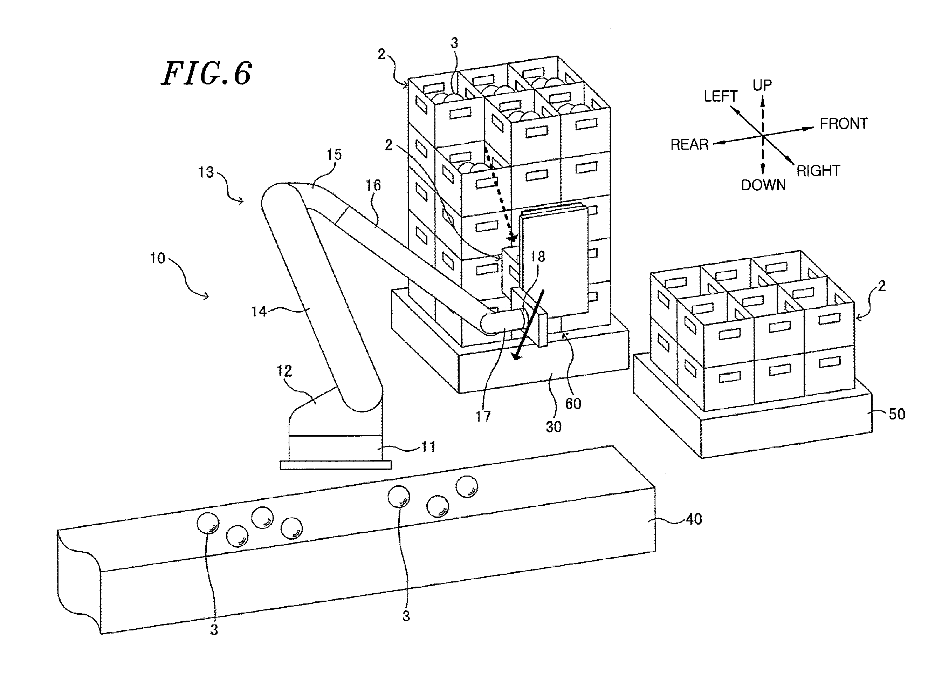

Thereafter, as shown in Fig. 6, the rotator 12 and the f irst to fifth structures 14 to 18 of the arm 13 are appropriat ely driven under the control of the controller 20. As a resul t, the robot 10 moves the hand 60, which holds side surface po rtion 4d of the container 2, toward a discharging position ne ar the upstream end of the conveyance route of the articles 3.

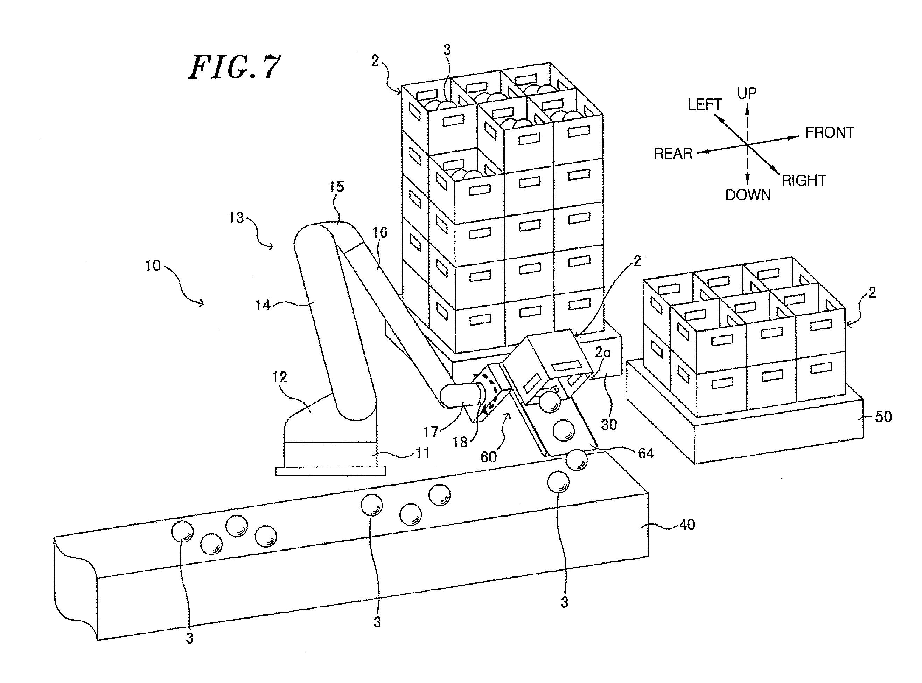

Then, if the hand 60 is moved to the discharging positio n as shown in Fig. 7, the rotator 12 and the first to fifth st ructures 14 to 18 of the arm 13 are appropriately driven under the control of the controller 20. As a result, the robot 10 rotates the hand 60, which holds side surface portion 4d of th e container 2, in one direction (in the clockwise direction i n this example) about the rotation axis Ax6. Consequently, t he posture of the container 2 is switched from the upward post ure to the downward posture. The articles 3 of the container 2 are taken out from the opening 2o and are slid down along th e chute 64. Thus, the articles 3 are discharged onto the conv eyor 40 (step S2 in Fig. 10).

Thereafter, if all the articles 3 contained within the c ontainer 2 are discharged onto the conveyor 40 as shown in Fig . 8, the rotator 12 and the first to fifth structures 14 to 18 of the arm 13 are appropriately driven under the control of t he controller 20. As a result, the robot 10 rotates the hand 60, which holds side surface portion 4d of the container 2 (th e empty container 2), in the other direction (in the counterc lockwise direction in this example) about the rotation axis A x6. Consequently, the posture of the empty container 2 is ret urned from the downward posture to the upward posture.

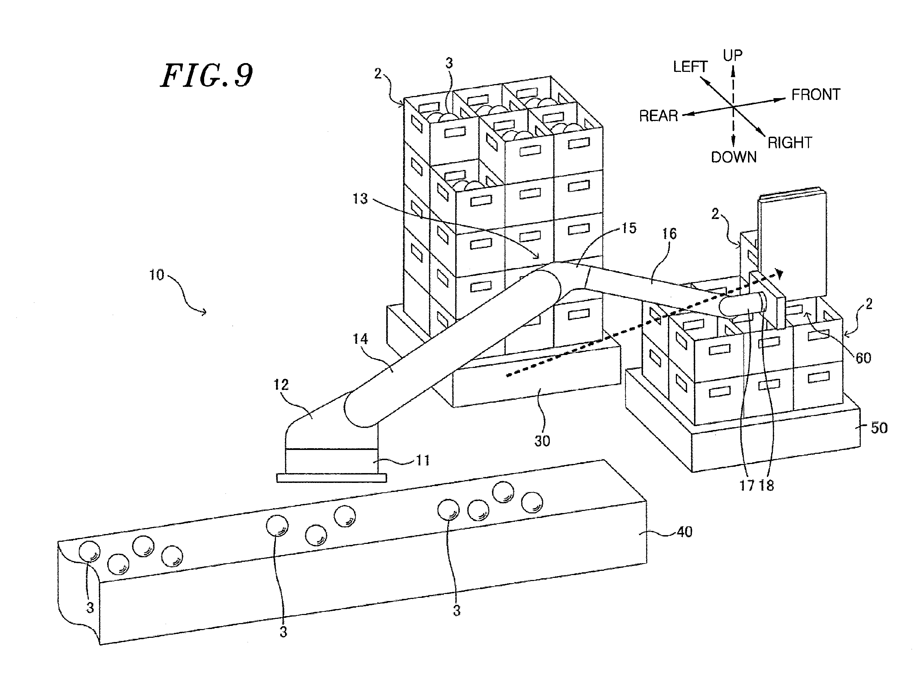

Subsequently, as shown in Fig. 9, the rotator 12 and the first to fifth structures 14 to 18 of the arm 13 are appropri ately driven under the control of the controller 20. As a res ult, the robot 10 moves the hand 60, which holds side surface portion 4d of the empty container 2, to a placing position on the placing-side pallet 50 corresponding to a target placing location of the empty container 2. Then, the holding mechani sm 63 is appropriately driven under the control of the contro ller 20. As a result, the hand 60 releases the side surface p ortion 4d of the empty container 2 held by the holding mechani sm 63, thereby placing the empty container 2 in the target pla cing location (step S3 in Fig. 10).

Thereafter, the rotator 12 and the first to fifth struct ures 14 to 18 of the arm 13 are appropriately driven under the control of the controller 20. As a result, the robot 10 move s the hand 60 to a holding position corresponding to a locatio n of the next holding target container 2 on the holding-side p allet 30. Then, the aforementioned operations are repeated.

In the present embodiment described above, under the con trol of the controller 20, the robot 10 moves the hand 60, whi ch holds the container 2, to the discharging position and the n rotates the hand 60 in one direction about the rotation axis Ax6. Consequently, the posture of the container 2 is switche d from the upward posture to the downward posture, whereby th e articles 3 contained within the container 2 can be discharg ed from the opening 2o using the gravity. Thus, the work of d e-palletizing the container 2 and the work of taking out the a rticles 3 from the container 2 can be carried out through a se ries of operations. This makes it possible to effectively tr ansfer the articles 3 contained within the container 2.

In the present embodiment, among other things, the hand 60 includes the bracket 61, the plate 62 and the holding mecha nism 63. The plate 62 is fixed to the bracket 61 so as to ext end in the same direction as the rotation axis Ax6. The conta iner 2 is held by the holding mechanism 63 arranged in the pla te 62. At this time, the plate 62 is arranged so that, when t he posture of the container 2 is switched to the downward post ure, the plate 62 can be positioned below the container 2. As a consequence, when the posture of the container 2 is switche d to the downward posture, the plate 62 can support the contai ner 2, thereby stabilizing the posture of the container 2. Th e plate 62 is formed longer than the container 2 in the height direction of the container 2. Therefore, when the posture of the container 2 is switched to the downward posture, the chut e 64 can be arranged in the protrusion portion 62p of the plat e 62.

In the present embodiment, among other things, the hand 60 includes the chute 64 along which the articles 3 contained within the container 2 are slid down. Therefore, when the pos ture of the container 2 is switched to the downward posture, i t is possible to smoothly discharge the articles 3. Since the chute 64 is made of stainless steel, it is possible to facili tate sliding of the articles 3 and to prevent generation of ru st even when the chute 64 is washed with water. Moreover, the chute 64 can be easily replaced due to the removable attachme nt thereof. This makes it possible to effectively perform a w ork even if the articles 3 are diverse.

In the present embodiment, among other things, the plate 62 for holding the container 2 is fixed to the outer edge por tion 61a of the bracket 61. Therefore, as compared with a cas e where the plate 62 is arranged in a portion other than the o uter edge portion 61a of the bracket 61 (e.g., in a central po rtion of the bracket 61), it is possible to enable the plate 6 2 to reach the container 2 positioned farther away. This make s it possible to expand the operation range of the robot 10.

In the present embodiment, among other things, the holdi ng mechanism 63 of the hand 60 holds the container 2 as a gene ral-purpose plastic container which has been used by workers.

Thus, there is no need to use an improved special plastic co ntainer. This makes it possible to reduce the cost otherwise required in preparing a special plastic container.

The present disclosure is not limited to the aforementio ned embodiment but may be modified in many different forms wi thout departing from the spirit and technical concept of the present disclosure. Modified examples will now be described one after another.

### (1) A case where a plurality of containers is held at a time

In the embodiment described above, the hand 60 is config ured to hold one container 2 at a time. However, the present disclosure is not limited thereto. The hand 60 may be configu red to hold a plurality of containers 2 at a time.

While not specifically shown, according to the hand 60 o f the present modified example, the plate 62 fixed to the oute r edge portion 61a of the bracket 61 to extend in the same dir ection as the rotation axis Ax6 has a length large enough to e nable the plate to hold a plurality of (e.g., three) containe rs 2 disposed along the direction of the rotation axis Ax6 (e. g., a length larger than the dimension of the plurality of con tainers 2 in the direction of the rotation axis Ax6). The pla te 62 of the present modified example is provided with a holdi ng mechanism 63 for holding one side surface portion 4 of each of the containers 2. The holding mechanism 63 of the present modified example includes a plurality of slide mechanisms, e ach of which is formed of a guide rail and a pair of sliders.
A pair of hooks is fixed at one end to each of the pairs of s liders. In the holding mechanism 63 of the present modified e xample, upon driving one or more actuators provided in suitab le portions of the hand 60, the driving power thereof is trans mitted to the respective pairs of sliders via a suitable powe r transmission mechanism, whereby the respective pairs of sli ders are opened or closed. By the opening/closing operations of the respective pairs of sliders, the respective pairs of h ooks are moved away from or toward each other along the direct ion of the rotation axis Ax6. As a result, the holding mechan ism 63 of the present modified example can hold or release one side surface portion 4 of each of the containers 2.

According to the present modified example, it is possibl e to obtain the same effects as in the aforementioned embodim ent. In the present modified example, the containers 2 are no t held in the bracket 61 but in the plate 62. It is therefore possible to obtain the following effects. In case where a pl urality of containers 2 is held in the bracket 61 at a time, t here is likelihood that, when the posture of each of the conta iners 2 is switched to the downward posture by rotating the ha nd 60 about the rotation axis Ax6, the heights of the respecti ve containers 2 with respect to the discharging position may differ from one another and the articles 3 contained within t he container 2 having a higher position may be damaged due to the falling shock. In contrast, if the containers 2 are held in the plate 62 extending in the same direction as the rotatio n axis Ax6, the respective containers 2 can be kept at the sam e height with respect to the discharging position when the po sture of each of the containers 2 is switched to the downward posture by rotating the hand 60 about the rotation axis Ax6. This makes it possible to discharge the articles 3 contained within the containers 2 with no damage. Thus, the work of de-palletizing the plurality of containers 2 and the work of tak ing out the articles 3 from the respective containers 2 can be carried out through a series of operations. It is therefore possible to realize the robot system 1 capable of effectively transferring the articles 3 contained within the respective containers 2.

In the present modified example, the plate 62 has a leng th large enough to enable the plate to hold a plurality of con tainers 2 disposed along the direction of the rotation axis A x6. The holding mechanism 63 holds one side surface portion 4 of each of the containers 2. Thus, the work of de-palletizin g the plurality of containers 2 at a time and the work of taki ng out the articles 3 from the respective containers 2 can be carried out through a series of operations. It is therefore p ossible to effectively transfer the articles 3 contained with in the respective containers 2 and to significantly reduce th e tact time.

### (2) A case where the chute is not provided

In the embodiment described above, the chute 64 is fixed to the protrusion portion 62p of the plate 62. However, the present disclosure is not limited thereto. If the articles 3 can be smoothly discharged depending on the nature thereof, t he chute 64 may be omitted. In this case, the protrusion port ion 62p of the plate 62 serves as a discharge path of the arti cles 3 when the posture of the container 2 is switched to the downward posture.

### (3) A case where the plate is fixed to a portion other t han the outer edge portion of the bracket

In the embodiment described above, the plate 62 is fixed to the outer edge portion 61a of the bracket 61. However, th e present disclosure is not limited thereto. The plate 62 may be fixed to a portion other than the outer edge portion 61a o f the bracket 61 (e.g., a central portion of the bracket 61).

### (4) A case where the container is held in the bracket

In the embodiment described above, the container 2 is he ld by the holding mechanism 63 provided in the plate 62 fixed to the bracket 61. Thus, the container 2 is held in the plate 62. However, the present disclosure is not limited thereto. For example, the plate 62 may not be provided in the bracket 61 and the holding mechanism may be provided in the bracket 61 . By holding the container 2 with the holding mechanism, the container 2 may be held in the bracket 61.

### (5) Other Modified examples

In the embodiment described above, the robot 10 rotates the hand 60 about the rotation axis Ax6 to thereby switch the posture of the container 2 to the downward position. Thus, th e articles 3 contained within the container 2 are discharged from the opening 2o onto the conveyor 40. However, the presen t disclosure is not limited thereto. For example, the robot 1 0 may rotate the hand 60 about the rotation axis Ax6 to thereb y tilt the container 2 so that the opening 2o can be substanti ally horizontally inclined. Thus, the articles 3 contained w ithin the container 2 may be discharged from the opening 2o on to the conveyor 40.

In the embodiment described above, the holding and relea sing of the container 2 is performed by the holding mechanism 63 arranged in the hand 60 and provided with the guide rail 63 1, the sliders 632 and the hooks 633. However, the shape and configuration of the holding mechanism and the shape and conf iguration of the hand are not particularly limited as long as they can perform the holding and releasing of the container 2

In the embodiment described above, the container 2 conta ining the articles 3 is placed on the holding-side pallet 30. However, the present disclosure is not limited thereto. The container 2 may be placed in a location other than the holding -side pallet 30 (e.g., a floor or a suitable conveying surfac e of the conveyor). In this case, the location other than the holding-side pallet 30 corresponds to the holding-side conta iner storage location.

In the embodiment described above, the robot 10 discharg es to the articles 3 contained within the container 2 onto the conveyor 40. However, the present disclosure is not limited thereto. The articles 3 contained within the container 2 may be discharged to a location other than the conveyor 40 (e.g., into a suitable container).

In the embodiment described above, the articles 3 discha rged from the container 2 are conveyed by the conveyor 40. Ho wever, the present disclosure is not limited thereto. The ar ticles 3 discharged from the container 2 may be transported b y a transportation unit other than the conveyor 40 (e.g., a li ft).

In the embodiment described above, the robot 10 places t he empty container 2 on the placing-side pallet 50. However, the present disclosure is not limited thereto. The empty con tainer 2 may be placed on a location other than the placing-si de pallet 50 (e.g., on the conveyor 40 or the floor). In this case, the location other than the placing-side pallet 50 cor responds to the placing-side container storage location.

In the embodiment described above, the container 2 conta ining the articles 3 is formed of a general-purpose plastic c ontainer. However, the present disclosure is not limited the reto. The container 2 may be formed of a special plastic cont ainer.

In the embodiment described above, the articles 3 are co ntained within the container 2. However, the present disclos ure is not limited thereto. The articles 3 may be contained w ithin a receptacle other than the container 2 (e.g., a cardbo ard box).

In the embodiment described above, description has been made on an example in which the articles 3 are solid bodies. However, the contents of the container 2 are not limited to th e solid bodies but may be a fluid such as a liquid or the like or a powder, which can be contained within the container.

In the aforementioned embodiment, the robot 10 is formed of a robot having six drive shafts. However, the present dis closure is not limited thereto. The robot 10 may be formed of a robot having five or less drive shafts or a robot having se ven or more drive shafts. In the aforementioned embodiment, the robot 10 is formed of a so-called single-arm robot. Howev er, the present disclosure is not limited thereto. The robot 10 may be formed of a multi-arm robot.

In addition to the above description, the embodiment and the modified examples described above may be appropriately c ombined.

While not specifically illustrated, the embodiment and the modified examples described above may be added with many different changes without departing from the spirit and scope of the present disclosure.

## Claims

1. A robot hand attached to a robot having one or more driv e shafts and configured to hold a container having an opening through which contents are put in and taken out of the contain er, wherein the robot hand is configured to move to a holding position to hold the container, to move to a discharging posi tion to tilt the container to discharge the contents through the opening, and to move to a placing position to release the container.

2. A robot comprising:
one or more drive shafts; and
the robot hand recited in claim 1.

3. A robot system, comprising:
the robot recited in claim 2;
a controller for controlling operations of the robot and the robot hand,
wherein the controller is configured to perform an opera tion of moving the robot hand to the holding position to hold the container, an operation of moving the robot hand to the di scharging position and tilting the container to discharge the contents through the opening, and an operation of moving the robot hand to the placing position to release the container h eld by the robot hand.

4. The robot system of claim 3, wherein the hand includes a bracket provided at a tip end of the robot so as to rotate ab out a rotation axis, a plate fixed to the bracket so as to ext end in the same direction as the rotation axis, and a holding mechanism provided in the plate and configured to hold the co ntainer.

5. The robot system of claim 4, wherein the plate is formed longer than the container in a height direction of the contai ner and is arranged such that, when the container is tilted, t he plate is positioned below the container.

6. The robot system of claim 4 or 5, wherein the hand furth er includes a chute provided in the plate and configured to al low the contents to slide down along the chute when the contai ner is tilted.

7. The robot system of any one of claims 4 to 6, wherein th e plate has a length large enough to enable the plate to hold a plurality of containers disposed along a direction of the r otation axis, the holding mechanism configured to hold one si de surface portion of each of the plurality of containers.

8. The robot system of any one of claims 4 to 7, wherein th e plate is fixed to an outer edge portion of the bracket.

9. The robot system of any one of claims 4 to 8, further co mprising:
a holding-side container storage location arranged with in an operation range of the robot and configured to store the container containing the contents, a transportation unit con figured to transport the contents, and a placing-side contain er storage location arranged within the operation range of th e robot and configured to store the container from which the c ontents have been discharged.

10. A robot control method for controlling a robot which inc ludes one or more drive shafts and to which is attachable a ha nd configured to hold a container having an opening through w hich contents are put in and taken out of the container, the m ethod comprising:
moving the hand to a holding position to hold the contai ner;
moving the hand to a discharging position and tilting th e container to discharge the contents through the opening; an d
moving the hand to a placing position to release the con tainer held by the hand.
